(19) **Europäisches Patentamt**
**European Patent Office**
**Office européen des brevets**

(11) **EP 2 339 534 A1**

(12) **EUROPEAN PATENT APPLICATION**

(43) Date of publication:
**29.06.2011 Bulletin 2011/26**

(51) Int Cl.:
**G06T 5/50** (2006.01)

(21) Application number: **09176379.7**

(22) Date of filing: **18.11.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Panasonic Corporation**
**Kadoma-shi**
**Osaka 571-8501 (JP)**

(72) Inventors:
• **Wedi, Thomas**
  **63225 Langen (DE)**

• **Knicker, Florian**
  **63225 Langen (DE)**
• **Palfner, Torsten**
  **63225 Langen (DE)**
• **Wittmann, Steffen**
  **63225 Langen (DE)**

(74) Representative: **Grünecker, Kinkeldey,**
**Stockmair & Schwanhäusser**
**Anwaltssozietät**
**Leopoldstrasse 4**
**80802 München (DE)**

(54) **Specular reflection compensation**

(57) The present invention provides a method and an apparatus for reducing the effect of specular reflections in an image. In particular, a specular reflection region in a target image is detected and replaced, at least partially, by an image area from a reference image or a plurality of reference images. A suitable replacement region is searched within a reference image by means of a displacement estimation, matching a region surrounding the detected specular reflection region with the reference image. Such specular reflection compensation mechanism has the advantage of being independent of the set-up for capturing the images.

## Fig. 11

**Description**

BACKGROUND OF THE INVENTION

In various imaging applications, an effect called specular reflection may cause the occurrence of glare spots within a captured image. Such bright spots mask the structure of the captured scene, resulting in loss of details and thus in a reduction of the resolution of such a captured image.

During the process of imaging, a sensor captures light reflected from the scene to be captured. In general, the term "light" does not necessarily refer to the light in the visible range. It may be any kind of an electromagnetic wave. The term "specular reflection" typically refers to the reflection of light coming from essentially the same direction, wherein a major part of this light is reflected by the surface of the captured object into and essentially the same direction. The term reflection refers to a change in direction of a wave-front of a light beam at an interface between two different materials, wherein the angle at which the wave is incident on the surface equals the angle at which it is reflected. The occurrence of the specular reflections depends on the properties of the captured surface and the characteristics and position of the light source relative to the captured surface. In particular, glossy materials, which reflect light to a large extent, such as wet surfaces may, when captured, lead to the origination of glare spots. Especially in cases with a point-like light source, intense beams of light falling on the glossy surface may be reflected in the same direction, causing extremely bright spots in the image captured in such circumstances.

There are many examples and applications where the specular reflection deteriorates the quality of the captured images. The effect of specular reflection may be observed, for instance, on the surface of water reflecting the light coming from the sun. Specular reflection also occurs in the photographing of documents printed on glossy paper, or when photographing glass surfaces such as faces wearing glasses, windows or mirrors. An unpleasant consequence of the specular reflection is the loss of information occluded by the glare spots. Such loss of information may be annoying for the persons viewing such a captured image. Moreover, specular reflections may cause serious problems in applications such as document photographing. In particular, the text or pictures of the photographed document may be occluded by the specular reflections, causing the photographed document to be incomplete.

Another field where specular reflections may lead to serious problems is medical imaging. One popular medical imaging application is endoscopy. The term "endoscopy" refers to imaging of the areas inside the body for medical reasons. The results of endoscopy, i.e. the captured images and/or video sequences, are used for supporting a diagnosis and surgery. Endoscopy is typically performed by an endoscope which may comprise regular flexible tube, a light source for illuminating the area inside a body to be viewed, and a detector such as a camera for capturing the desired area. The light is typically introduced into the body via an optical fiber from a light source that may be connected to the endoscope outside the body. The images captured via endoscopy are particularly susceptible to specular reflections. This is caused on one hand by mainly wet and thus highly reflective surfaces being an object of the endoscopy. On the other hand, the light source for illuminating the inside of the body has mainly a point characteristic resulting in a beam of light illuminating a surface coming from essentially the same direction and resulting thus in a reflection of the beam of light in another essentially same direction.

The bright spots resulting from specular reflections during the endoscopy significantly degrade the image quality. In particular, in the over-saturated bright spot areas, there is no image information and consequently abnormalities could be missed by the physician during examination of the captured images. Secondly, the endoscope is typically in a relative movement with respect to the captured object. This is caused by a possible random or controlled movement of the endoscope itself and/or by the movement of the scene caused, for instance, by the patient's respiration cycle or heart beating. This permanent movement results also in a corresponding movement of the glare spots caused by the specular reflections. The moving bright spots on a display of an endoscopy device disturbs the physician in his diagnosis and surgery, and may distract his attention in particular in case of operations performed under use of endoscopy.

In order to compensate for specular reflections, document US 6,088,612 discloses employing two light sources in an apparatus for the detection of cervical cancer. The glare caused by the specular reflection is removed by combining images captured using the different light sources resulting in different illumination and consequently, in different positions of the bright spots within the two captured images.

Document US 2008/0165266 A1 relates to reducing the specular reflections in photographed documents by combining images from multiple differently positioned cameras.

One of the disadvantages of these prior art solutions is the increased complexity and price of such devices due to doubling of the light sources or light detectors. The prior art solutions make use of an additional information resulting from the known positioning of the two light sources or light detectors. Thus the specular reflection compensation is also specific for the capturing system and cannot be applied to images captured by other systems.

SUMMARY OF THE INVENTION

The aim of the present invention is to cope with the above mentioned problems and to provide an efficient reduction of the specular reflection effect, which may be applied to captured images independently of the type and structure of the capturing device.

This is achieved by the features as set forth in the independent claims.

Preferred embodiments are the subject matter of the dependent claims.

It is the particular approach of the present invention to replace at least parts of a specular reflection region in a target image with an image area from a reference image, wherein the replacement image area is determined by estimating the position of the specular reflection region in the reference image based on matching of an image region surrounding the specular reflection region with the reference image.

According to an aspect of the present invention, a method is provided for reducing specular reflections in an image of a plurality of images, each image comprising a plurality of pixels. The method comprises detecting a specular reflection region (area) in a first image (target image), estimating a position of the detected specular reflection region in a second image (reference image) by matching a surrounding area with the second image, the surrounding area including a plurality of pixels surrounding the detected specular reflection region, and replacing at least partially the specular reflection region in the first image by the image area at the position estimated in the second image.

According to another aspect of the present invention, an apparatus for reducing specular reflections in an image from a plurality of images. Each image comprises a plurality of pixels. The apparatus comprises a specular reflection detector for detecting a specular reflection area in a first image, a displacement estimator for estimating a position of the detected specular reflection area in a second image by matching a surrounding area with the second image, the surrounding area including a plurality of pixels surrounding at least partially the detected specular reflection area, and further comprises a replacement unit for replacing at least partially the specular reflection area in the first image by the image area at the position estimated by the displacement estimator in the second image.

Here the term "a specular reflection area" refers to an area of bright spots in an image captured by a camera, the bright spots being caused by reflections of light on a flat surface. The plurality of images may be a part of a video sequence comprising images captured at different time points. However, it may also be a plurality of images captured by multiple cameras at the same time point. The present invention is applicable to any set of images capturing essentially the same scene or object. It may be a combination of temporally and spatially distinct images, for instance a video sequence taken by a stereo camera, etc.

Preferably, the position estimation determines in the first image a reflection surrounding region as an image area surrounding at least partially the detected specular reflection area and searches, in the second image, image areas matching the reflection surrounding region and suitable for replacing the specular reflection image area in the first image. The suitability may be measured by a predetermined criteria. After the matching, from among the searched image areas the best candidate is selected for replacing the specular reflection image area. The reflection surrounding region may be, for instance a boundary or a part of a boundary of the detected specular reflection area. The boundary may be one or more pixels thick and may be selected to fit in a predefined geometric structure such as a rectangle, a triangle, a hexagon, or any other shape. For instance, a shape may also be used, copying the shape of the specular image area and comprising a boundary with a thickness of a predefined amount of pixels.

Preferably, the predetermined criteria includes in particular at least one of the following criteria: the amount of saturated pixels in the searched image area, mean brightness of the searched image area, amount of spatial information of the searched image area, amount of noise of the searched image area, smoothness of the transition between the searched image area and the region surrounding the detected specular reflection area, or temporal distance between the first and the second frame or perspective distance between the views of the first and the second frame (for instance, a baseline distance in a multi-view setup). These criteria may be used individually or in combination in order to select the most suitable candidate for a given reference image for a replacement of the specular reflection in the target image. The spatial information refers, in general, to amount of edges (structure) in the image. It may be detected by means of a variance of the searched image area, or by means of edge detection, or by any similar method. The amount of spatial information corresponds to and can be represented and/or measured as frequency information, amount of structure, and/or amount of texture. Another criteria for suitability of the replacement region may be used, such as relative motion of the specular reflection and the motion of the surrounding region.

The specular reflection compensation of the present invention is advantageously applied to detect possibly more than one specular reflection regions in the target image and the steps of displacement estimation and replacement is also performed for each of the detected specular reflection areas. Preferably, the displacement estimation step is further repeated for a plurality of reference images, the plurality of reference images including images of a video sequence or images taken by multiple cameras.

Preferably, the detection of the specular reflection image area(s) is performed by detecting saturated pixels in the first image. This may be performed, in particular, by classifying of each pixel of the first image as saturated or as non-saturated. A pixel is classified as saturated if its value exceeds a predefined threshold and classified as not saturated otherwise. The detection further includes identifying a specular reflection image area or a plurality thereof by grouping together adjacent pixels classified as saturated pixels. The grouping may further comprise including into the group of pixels classified as saturated also the pixels which are classified as non-saturated, but which are surrounded by a predefined number of pixels classified as saturated. This enables detection of more compact and continuous specular reflection areas. The identified specular reflection area(s) may further be enlarged in order to cover also possible corona-like artifacts that may occur in the proximity of the specular reflection boundary. The enlargement may be performed, for instance, by the morphological image operation of dilatation or by any other similar operation/filtering. For instance, the boundary may be automatically extended by one or several pixels.

Preferably, the replacement of the specular reflection includes selecting a replacement area for replacing the specular reflection image area in the first image from among a set of candidate replacement areas, adapting the brightness of the selected replacement area to the brightness of the first image, and replacing the specular reflection image area with the adapted replacement area. The set of candidates may, in particular, include the best replacement candidates from different reference pictures. Apart of the brightness adaption, a smoothing of the transition region between the target image and the replacement area may be performed.

The present invention is applicable to any imaging application where specular reflections may occur. This may be a photographing with a still/video camera, microscopic photography, medical imaging such as endoscopy, photographing of documents, etc.

In accordance with yet another aspect of the present invention a system is provided for performing endoscopy, the system comprising at least one light source for illuminating an object to be captures; at least one camera for capturing a plurality of images of the illuminated object, an endoscope for positioning at least an optical part of the camera in the proximity of the object to be captured and the specular reflection compensation apparatus as described above for detecting and reducing specular reflections in the captured plurality of images. The endoscopy system may further comprise an output unit for outputting the compensated images. Here, the output unit may be a display or storage. The optical part of the camera here refers to a means through which light enters to the camera sensor. The camera sensor may be located at the front of the endoscope. Alternatively, the light may be transported to the camera sensor by an optical fiber.

In accordance with still another aspect of the present invention, a computer program product comprising a computer-readable medium having a computer-readable program code embodied thereon is provided, the program code being adapted to carry out the present invention.

The above and other objects and features of the present invention will become more apparent from the following description and preferred embodiments given in conjunction with accompanying drawings in which:

Figure 1    is a picture of an example of an endoscopic image with specular reflections (Source: taken from Wikipedia, http://en.wikipedia.org/wiki/File:Am ulcer.gif);

Figure 2    is a flow diagram of a method for reduction of specular reflections according to the present invention;

Figure 3    is a flow diagram of an example method for detecting the specular-reflection regions in an image according to an embodiment of the present invention;

Figure 4    is a schematic drawing illustrating displacement estimation according to an embodiment of the present invention;

Figure 5    is a flow diagram of an example method for displacement estimation applicable for the specular-reflection reduction of the present invention;

Figure 6    is a schematic drawing illustrating replacement of specular-reflection regions according to an embodiment of the present invention;

Figure 7    is a flow diagram of an example method for specular-reflection region replacement;

Figure 8    is a schematic drawing illustrating transition region between a replacement area in a reference image and the area surrounding the specular reflection to be replaced in the target area;

Figure 9    is a schematic drawing illustrating an example of performing brightness compensation;

Figure 10    is a schematic drawing illustrating an example weighting function, which may be applied for smoothing the transitions between the image area replacing the specular reflection region and its neighborhood;

Figure 11    is a block diagram illustrating functional blocks of a specular-reflection reduction device according to the present invention; and

Figure 12    is a schematic drawing illustrating an employment of the present invention in an endoscopy system.

DETAILED DESCRIPTION OF THE INVENTION

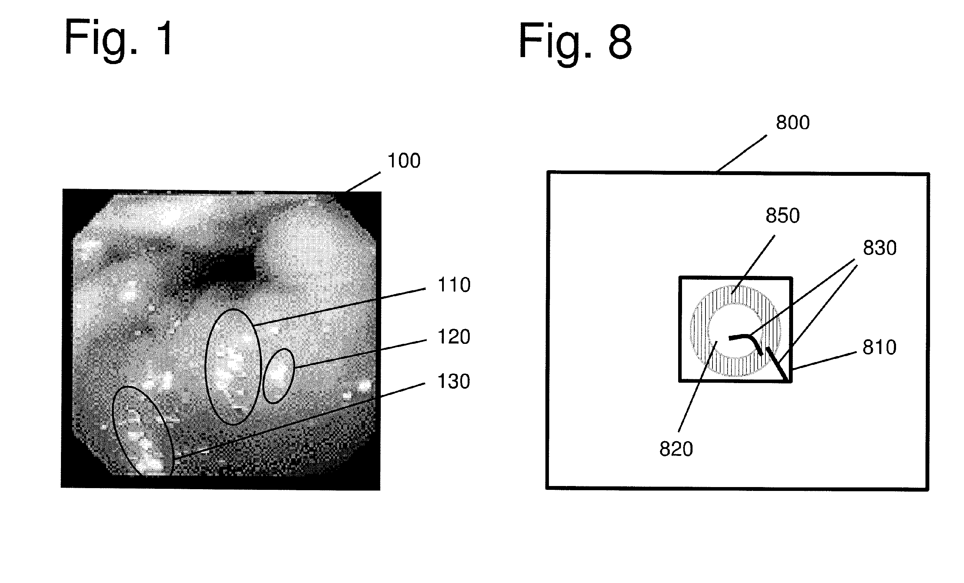

Figure 1 shows an example of an image 100 captured using an endoscopy device (an endoscope). As can be seen in the image 100, specular reflections form rather small saturated image regions such as, regions in the area 110, 120 and 130. The saturated image areas effectively cover the texture of the captured object. Consequently, there is no useful information in the positions of the specular reflections.

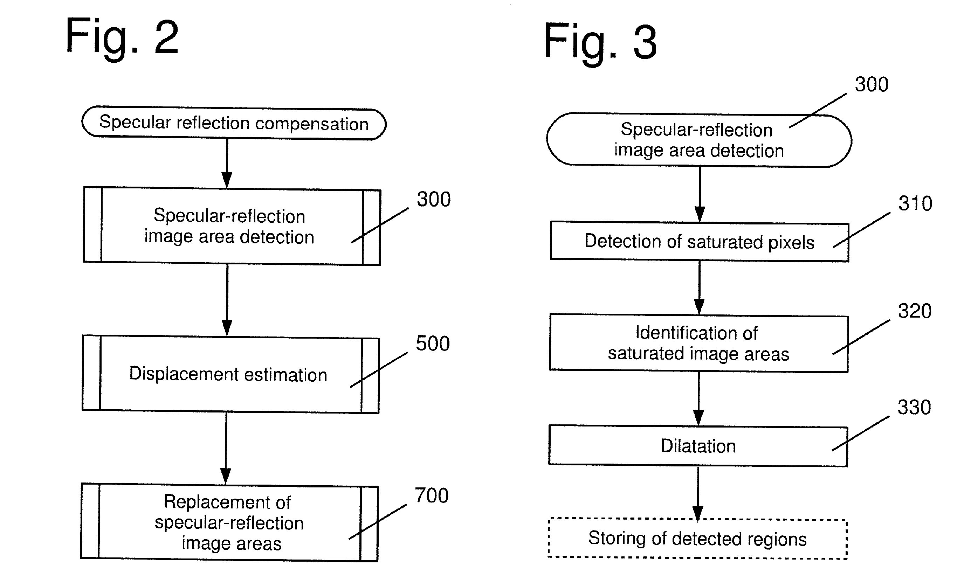

Figure 2 is a flow diagram describing a method for detecting and reducing the specular reflections in a captured video sequence according to the present invention. The specular reflection reduction method of the present invention first detects 300 specular reflection regions in the captured image. In the next step 500 the regions corresponding to image areas covered by the specular reflection in the captured image are searched in another image or a plurality of images. Finally, the specular reflections in the captured image are replaced 700 with the information from the one or a plurality of images.

Figure 3 illustrates specular reflection image area detection 300 in accordance with an embodiment of the present invention. Accordingly, the detection of specular reflection regions is based on the observation that specular reflection effects appear typically in an image as a region with saturated pixel values such as the regions 110, 120, and 130 shown in Figure 1. Thus in accordance with an embodiment of the present invention, first the saturated pixels are detected 310. In the second step 320, neighboring pixels identified as saturated are connected to build a specular reflection region, which will be denoted as σ further in this document. The detection of saturated pixels 310 may be performed, for instance, by comparing individual pixel values with a predetermined first threshold. Accordingly, the pixels with a value higher than or equal to the first threshold are classified as saturated. The term "pixel" here refers to image pixel values in the given color space. The detection of specular reflection may be performed in a single color channel such as a luminance channel in a color space like YUV or YCrCb. However, better results may be achieved if the saturated pixels are detected using more color channels. Alternatively, the detection may also be performed in a mean image obtained by averaging color component images such as R, G, and B of the RGB color space. By thresholding each pixel value of an image, a binary image may be obtained, in which ones denote pixels classified as saturated and zeros denote the remaining pixels (or vice versa). It may be advantageous to further process such a binary image due to simplicity and lower storage requirements for storing such a binary image in comparison to storing a copy of a luminance image.

After having classified the pixels of an image as either saturated or not, the saturated image regions are identified. Such identification of saturated image regions may be performed simply by connecting the pixels identified as saturated. In order to obtain possibly continuous saturated regions, various rules may be provided. For instance, a pixel classified as non-saturated may be appended to a saturated region σ if it is surrounded by at least $k$ pixels classified as saturated, $k$ being an integer from the range [1, 8]. Advantageously, $k$ is higher than 5 in order to include only non-saturated pixels which are prevailingly surrounded with pixels classified as saturated from at least three sides. Alternatively, it may be beneficial to provide a second threshold, during the step of detection 310 of saturated pixels, lower than the first threshold, for identifying as saturated also those pixels having at least one (or another number of) neighboring pixel which has already been identified as saturated and value higher than the second threshold. Providing the second threshold enables detecting of specular reflection regions as continuous even if there are some slightly darker pixels in the texture of the specular region.

Moreover, there may also be distorted image pictures around the borders of specular reflection regions forming coronal like artifacts. Therefore, it may be beneficial to include these surroundings into the detected specular reflection region. This may be performed, for instance, by applying a morphologic dilatation operation 330 resulting in a correspondingly enlarged specular reflection region denoted $S$. A morphologic dilatation operation assigns to a pixel in an image the maximum value of pixels in its neighborhood. The neighborhood is typically defined as the left and right pixels, or as the top and bottom pixels. However, the neighborhood may be defined arbitrarily and may include more neighbouring pixels, possibly all eight of them.

In general, not all saturated image areas originate necessarily from specular reflections. For example, in the case of endoscope images, fat in the human body is of white color and could be mistaken for a specular reflection. Any white objects in an image or a video sequence may be wrongly detected as a specular reflection area. Moreover, objects which are close to the light source may also appear oversaturated. Such areas within an image may advantageously be distinguished from the true specular reflections since they do not need to be compensated and thus a computational power is not unnecessarily spent. The displacement estimation and replacement of the present invention, however, should typically not result in replacing the false specular reflection regions, if the conditions and thresholds for selecting the candidates are designed well. In order to distinguish white areas in the image from saturated areas resulting of the true specular reflections, the features of the specular reflections' movement may be considered. In particular, a specular reflection usually moves in front of the background, when there is motion in the scene. Even if the amount of motion is rather small and the reflection cannot be completely compensated with data from adjacent frames, the motion can be detected. In contrast to specular reflections, a white area belonging to the content of the image would not move in front of the background. The detection of this kind of motion enables an efficient way to distinguish specular reflections and white areas. Once a region is reliably classified (distinguished from white image areas) as a specular reflection region, it can be tracked temporally so that the classification does not have to be repeated for each frame.

Another example of saturated image regions other than the specular reflections areas are image/video overlays such as a text, a time stamp, a logo, etc. If the overlay includes a white color area, it may be wrongly detected as a specular reflection. However, overlays have several particular features, which may be utilized in order to distinguish them from the true specular reflection regions. Some of these features are also true for a general white region in an image. For instance, the number of white pixels in an overlay is typically much greater than the number of pixels of a specular reflection. Moreover, an overlay is completely independent of motion in the scene unlike the specular reflections. This may be used as mentioned above for a reliable classification of white regions in the image as either specular reflections or as image content, wherein the specular reflections may be tracked in the images following (or preceding) the image for which the classification has been performed. Furthermore, overlays have typically a characteristic shape. For instance, an OCR-like (Optical Character Recognition) detection of characters in the image may be applied to distinguish some types of overlays from the specular reflections.

The detected and possibly enlarged saturated regions S may be directly further processed (cf. steps 500 and 700 of displacement estimation and replacement) or may be stored in a buffer for further processing, depending on the data flow in the system implementing this embodiment of the present invention.

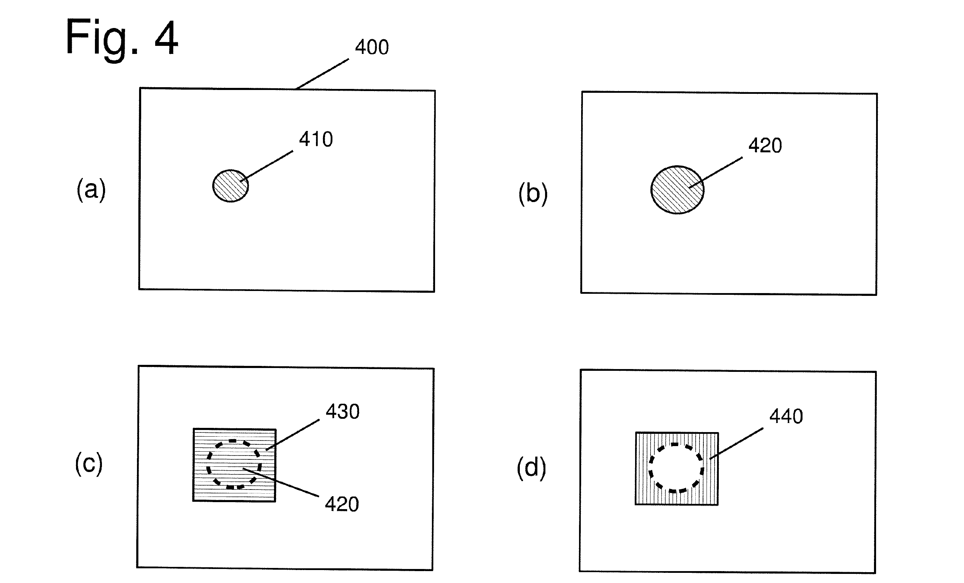

Figure 4 (a) illustrates a captured image 400 in which the specular reflection regions are to be detected. Region 410 corresponds to the saturated region $\sigma$ obtained after performing steps of detection 310 of saturated pixels and identification of saturated regions 320.

Figure 4 (b) shows the same image frame 400 with an enlarged specular reflection region S 420 obtained by dilatation operation 330. Figures 4 (a) and (b) only show one detected specular reflection region 410 and the resulting enlarged area 420. However, typically, a single image contains a plurality of specular reflections, which would be detected and further processed either sequentially or in parallel.

As soon as the specular reflection regions 420 have been identified, these regions and/or the position of these regions within the captured image 400 are stored. In particular, the detected specular reflection regions may be stored in a form of a bit map representing all pixels of the frame 400 and having one binary value for pixels not belonging to any specular reflection region and having the other binary value for pixels belonging to the specular reflection region. Alternatively, the position within the image 400 and the shape and/or size of the specular reflection region may be stored. However, any other information which enables identification of the specular reflection regions may be used for storing as well.

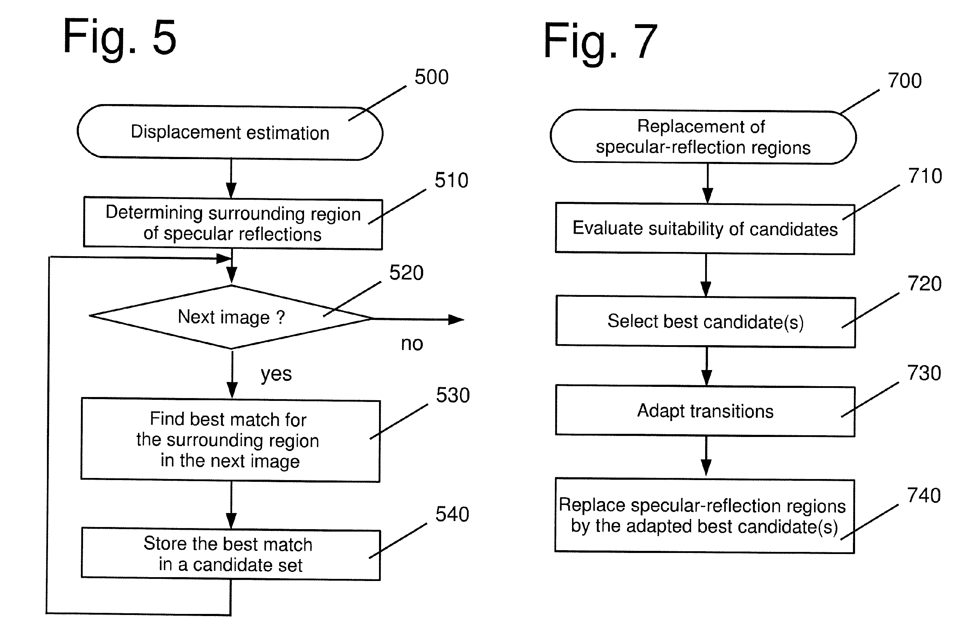

Figure 5 illustrates a flow diagram of example displacement estimation 500 according to the present invention. The displacement estimation 500 is performed for each of the detected 300 specular reflection regions in the captured image. The displacement estimation searches image regions in different frames, corresponding to the parts of the image occluded by the detected specular regions. In order to facilitate this, for a given specular reflection region 420, an image area 430 larger than the specular region 420 and fully including the specular region 420 is defined. This coverage area 430, denoted as $\tilde{S}$, may have for instance, a block shape or any other geometry shape such as, a triangle. The coverage image area 430, having a shape of a rectangle and comprising the detected specular reflection region 420, is illustrated in Figure 4 (c). However, the present invention is not limited to coverage areas 430 of these forms. In general, the coverage area 430 may have an arbitrary shape, for instance, a shape copying the contour of the detected specular reflection area and having a thickness of a predefined number of pixels.

Figure 4 (d) illustrates a surrounding region 440, denoted as $D$, obtained as the coverage block 430 without the specular reflection region 420, $D := \tilde{S} \setminus S$. In other words, the surrounding region $D$ represents those pixels surrounding the enlarged detected specular region $S$, which fit to the coverage area $\tilde{S}$.

After having determined 510 the surrounding region 440 for a specular refection 420, a reference image (frame) is read, if available, in the step 520. A reference frame is a frame other then the currently captured image (image in which the specular reflection region 410 has been detected). Then, a best match is searched for the determined surrounding region 440 cut from the captured image in the reference image read.

Search of the best match 530 may be performed similarly to a block matching performed for motion estimation in the majority of present video compression algorithms. In particular, it is assumed that a surrounding region 440 occurs in the captured image from which it is cut as well as in the reference image. This assumption typically holds for endoscopy images since an endoscopic diagnosis or operation is usually directed to a particular part of the body and its close surroundings, which can be reached by a flexible arm of the endoscope. This assumption is also typically valid for natural video sequences without fast scene changes. The aim of the displacement estimation 500 is to find in a reference image, chosen from a plurality of images related to the same scene, the best match for the specular reflection surrounding region from the captured image being a target image for specular reflection replacement. The matching region may be found by means of a motion estimation. The motion estimation may be performed according to any approach, for instance based on optical flow. Some examples of such methods can be found in N. Paragios et al. (ed.) "Mathematical Models in Computer Vision: The Handbook" ,Chapter 15 by D.J. Fleet, Y. Weiss, "Optical Flow Estimation", pp. 239-258, Springer 2005, ISBN 0387263713. It may also be performed by minimizing sum squared differences or sum of absolute differences, or maximizing normalized cross-correlation. In order to facilitate this, in the reference image, a search region is defined in which the surrounding region of the specular reflection is looked for. Preferably, the search region surrounds a position corresponding to the position of the specular reflection within the captured image. The size of the search region may be fixed, or adaptable to the amount of motion between the reference frame and the current frame. In general, the search region may be formed by the entire reference image. However, in order to reduce the computational complexity necessary for the position estimation, a limited search region may be more advantageous. In order to find the best match, the surrounding region of the specular reflection from the captured image is shifted within the reference image and compared pixel by pixel to the content of the overlapping part of the reference image. In order to quantify the match, a similarity measure is used which may be based, for instance, on the sum of absolute pixel-wise differences. The sum of absolute differences (SAD) is, in fact, a measure of dissimilarity. The higher the similarity of the compared objects, the lower the sum of absolute differences. Other similarity and dissimilarity measures may equally be employed, such as mean squared error, various optionally weighted norms, correlation coefficient or any other measures expressing the level of (dis) similarity between the compared regions. The shifted position that yields the best match with the surrounding region 440 is then used as a candidate for the replacement for the specular reflection in the captured image. After the best match has been found, the information about the best matching region is stored in a candidate set 540.

The mean squared error and the sum of absolute differences are measures typically used for block matching in the well-known codecs employing the motion estimation. However, for some applications, metrics may be beneficial which are capable of penalizing jagged edges. This may be achieved by calculating, for instance, the mean squared error on Laplace filtered images and by combining the result with the standard mean squared error, for example, as the following weighted sum:

$$d(D,D') = \left\| D - D' \right\|_{\ell^2} + \gamma \left\| D * h - D' * h \right\|_{\ell^2}$$

where $h$ denotes an impulse response of a high-pass filter, $\gamma$ is a weighting parameter, $D'$ denotes a region compared with the surrounding region $D$, and * denotes the convolution operation. The high-pass filter in this example is a Laplace filter. However, any other high-pass filters are applicable as well. The effect of the jagged edges may be caused for instance, by aliasing or interlacing.

In general, the edges in the image carry the actual image information. The edges are typically expected to be continuous since this is the case of the majority of the typically scenes and objects captures by an image or video camera. Therefore, jagging is not only annoying as an artifact, but it also distorts the captured information. In particular, in endoscopic images, the most important structures are typically the blood vessels, which can be distinguished in the captured image or a sequence of images as dominant edges. The edges also carry the most important information in captured texts as well as when capturing highly structured scenes such as city panoramas or objects with geometric textures. Therefore, it is important to evaluate the smoothness of edges during the displacement estimation. The smoothness of edges here refers to the smoothness in the direction along the edges, i.e. to continuousness of the edges.

In order to increase the robustness of the displacement estimation, a threshold $\delta$ may be defined. If a displacement detected of the specular reflection surrounding region $D$ with respect to the matching area $D'$ in the reference picture is higher than the threshold $\delta$, which means $d(D, D') > \delta$, such a displacement is considered invalid and shall not be considered for the displacement compensation.

The repeated search of matching image regions in several frames leads to a set of candidate regions, which may be used to compensate the specular reflections.

The specular reflections may move continuously depending on the movement of the object being captured, and depending on the mutual position between the object to be captured, the camera and the light source. Consequently, it may occur that the specular reflection region moves to its neighborhood and may become a part of the reference region $D$'. In such a case, the specular reflection part of $D$' has to be excluded from the error metric calculation. This is possible if the specular region image areas have also been detected in the reference image. Even if the specular reflection becomes a part of the matching surrounding region $D$', the corresponding replacement region $S$' may still be a good candidate for compensating at least partially the specular reflection image region in the target image.

For instance, in case of endoscopic images, the captured objects may posses a repeating pattern. This may also be the case for other images, for instance, for images of crystalloid structures, microscopic images, curled and waved objects (such as wavy water surfaces), or any objects with an essentially regular pattern (such as a building with windows). Consequently, the specular reflections may also occur in a kind of repeating pattern. In such a case, the search for the best match may deliver ambiguous results. For instance, a specular reflection region may be matched in the image with a similar but not corresponding specular reflection region. For example, assume that the target image includes three specular reflection regions $A$, $B$, $C$, which can be found in the reference image as regions $A$', $B$', and $C$', respectively. Due to the mutual movement of the captured object(s), the camera and the light source it may happen that for a specular region $A$ in the target image, the region $B$' in the reference image will be determined as the best matching region rather than the region $A$'. In order to avoid this kind of ambiguity, a possible solution is to limit the size of the search region for the displacement estimation in such a way that it is smaller than the pattern period, the pattern period being the distance between the repeating parts of the picture. However, this may also diminish the quality of the displacement estimation.

Alternatively, in order to avoid this problem, the best match within the same frame may be searched, in order to detect the repeating pattern. The detected pattern may then be matched with a corresponding pattern in the reference image, resulting in resolved problem of ambiguity. Corresponding of the specular regions in the target image with the specular regions in the reference frames while taking into account the pattern of both the target and the reference image may improve robustness of the displacement estimation, for instance in applications, where the correctness of the replacement is important.

On the other hand, if the perceived image quality is more important than the correctness of the replacement, finding the best within the same frame may also provide a candidate for replacement. In such a case, the specular reflection area in the target image is replaced (at least partially) with a replacement area found in the same target image. Such a replacement may be employed, for instance, if there is no suitable candidate from the other images. However, this is only possible for applications, which are not sensitive to details. For instance, this approach may be used for replacing the specular reflection regions within endoscopic images during the operations, where the specular reflections are annoying and where the details may be updated in the upcoming images. However, it is not suitable to apply such a method for endoscopic imaging performed with a purpose of diagnosis. It may also be used, for instance, to improve the quality of natural images targeted for previewing or viewing. However, the employment of this method is not suitable for some surveillance applications or for replacing parts of a text.

For certain surfaces a specular reflection may lead to special cases of specular reflection patterns. For example periodically structured surfaces (like waves) may have specular reflections, which are periodically interrupted. This means that there is a specular reflection region $\sigma$ with interruptions $\rho \subset \sigma$. As the specular reflection moves, it may occur that the complementary interruptions region $\rho$ becomes occluded by the specular reflection and the complementary part $C\rho$ of the interruptions region becomes uncovered. In such a case the specular reflection may be completely compensated, even if the movement of the specular reflection is rather small.

The displacement estimation 500 delivers a candidate set of regions within a plurality of images, the regions best matching the specular reflection surrounding region determined in the step 510. Once the candidate set is available, the specular reflection region in the target image may be replaced by one or a combination of the regions in the candidate set.

Figure 7 illustrates a flow diagram of an example of replacing 700 of specular reflection regions detected in step 300 using the results of displacement estimation 500. As a first step 710, the suitability of the image areas candidate for replacement of the specular reflection is evaluated and the best candidate (or candidates) is selected 720. If necessary, the transition between the replacement region from the reference image and the surrounding region of the target image is smoothed 730. Finally, the specular reflection region in the target image is replaced 740 by the adapted best replacement region (or a plurality of replacement regions).

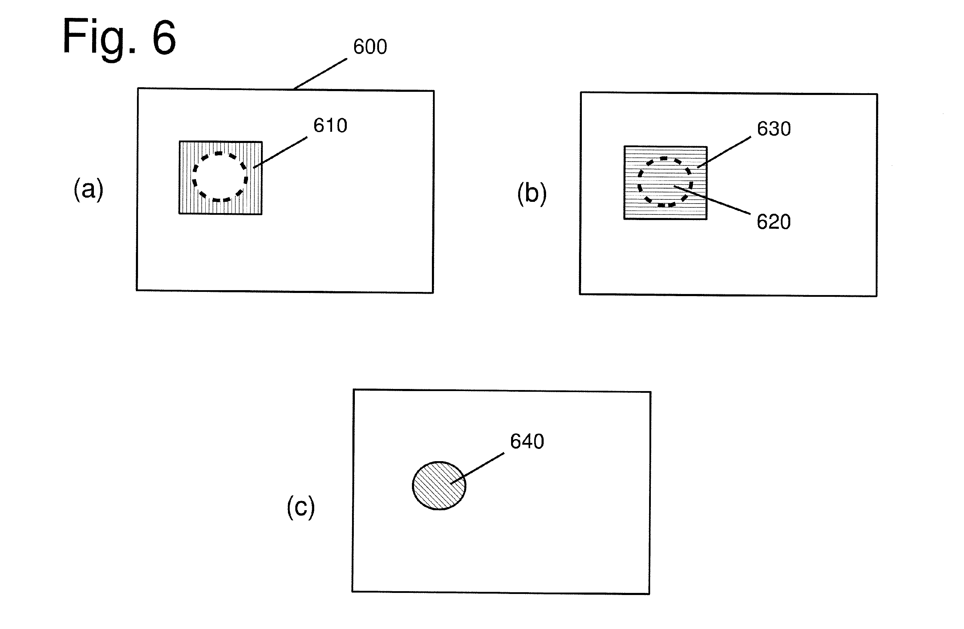

Figure 6 illustrates schematically the procedure of replacing a specular reflection region in the captured (target) image with a suitable region from a reference image. Specular reflection surrounding region $D$' 610 in the reference image 600 has been identified as the best matching to the surrounding region $D$ of the target image from the set of candidates. Accordingly, a covering region $\tilde{S}$' 630 is identified, which includes the specular reflection surrounding region 610 and all pixels surrounded by this region. The covering region 630 denoted as may be defined as a convex hull of

$$D': \widetilde{S}':= conv \ D'= \bigcap_{\substack{D'\subseteq K \\ K \text{ convex}}} K$$

After finding he covering region 630, the reference region *S'* may be cut out, which will be further used for replacing the specular reflection area in the target image.

In general, in order to replace the specular reflection regions in the target image, first the suitability of candidates is evaluated 710. The determination of the best candidate for the replacement of specular reflection region *S* by the region $S':= \widetilde{S}\backslash D'$ from one or a plurality of reference images, several criteria may be taken into account individually or combined. In the following, some examples of such criteria are provided.

Typically, the specular reflections occur in many consecutive frames. Therefore, the best reference region for replacement has to be chosen such that it includes possibly no specular reflections. For instance, the number of saturated pixels in the candidate replacement region *S'* may be counted. If it is zero, the reference region *S'* may be used as a reference. However, also in the case, where the number of saturated pixels is not zero, at least parts of the replacement region may be used. In order to select the best candidate region, the region *S'* may be selected which has the smallest number of saturated pixels. The remaining saturated pixels may be, for instance, replaced by pixels from other candidate regions, or spatially interpolated.

The best candidate may be chosen as the one having the most image structure. Such a selection of this candidate allows recovering most of the details of the captured image mapped by the specular reflection. The variance of the candidate replacement region *S'* may be taken as a measure of the amount of structure in *S'* . Then, the candidate region with the maximum variance is chosen for compensating the specular reflection region *S*.

Furthermore, the (mean) brightness of *S'* may be evaluated. If the mean brightness of the replacement region *S'* from the reference image is similar to the mean brightness of the neighborhood *D* of the specular reflection area in the target image, which means that $|\mu(S') - \mu(D)| < \delta$ , then *S'* may be selected for compensating the specular reflection. If several candidates satisfy this criterion, the one which is temporally closest to *S* may be selected. However, this criterion may not be suitable in all scenarios. For instance, if the camera remains at one spot and then moves very fast causing motion blur and moves back slowly to the same spot. Thus, alternatively, a region spatially closest to *S* may be selected. This may be, for instance, a region taken with a camera having the smallest distance from the camera taking the image with the specular reflection in a multi-view camera setup. It may also be the region with smallest relative motion vector between the surrounding region and the specular reflection region.

Still alternatively, as the best candidate the replacement region may be selected, the surrounding *D'* of which has the smallest difference in brightness from the surrounding region *D* in the target image, that means that $|\mu(D) - \mu(D')|$ or the candidate may be selected, the surrounding *D'* of which in the reference image provides the best match of the surrounding region *D* in the reference image, namely, the $\arg\min\|D - D'\|_{\ell 2}$.

As a further criterion for finding the best candidate area for replacing the specular reflections, the amount of noise may be used. Accordingly, the noise of different candidate regions *S'* from different reference images may be measured and compared. This is particularly advantageous if an automatic gain control (AGC) is activated. The automatic gain control is a mechanism enabling an automatic adaptation of the brightness of different images (frames) within the plurality of images, for instance, of the same video sequence. Such a mechanism is beneficial since in general the plurality of images may differ in brightness. The automatic gain control may be performed in real-time after capturing and before the application of the specular reflection region compensation of the present invention. However, after such an automatic gain control, the candidate regions from different frames may have the same brightness, but different noise levels. This is caused by the automatic gain control, which may produce the same brightness for a different illumination. In order to select the most correct candidate for the replacement, the candidate *S'* having the smallest amount of noise may be selected.

If no automatic gain control is employed before the specular reflection compensation, in general, brighter reference areas may be preferred over the darker reference areas in order to avoid brightening in a possible post-processing, since brightening in general amplifies the noise.

Another criterion for the best candidate selection may be the smoothness of the transition between the reference region *S'* for replacing the specular reflection region *S* in the target image and the surrounding region *D* . Figure 8 illustrates an image 800 with a specular reflection replacement region 820 and the surrounding region 810. The smoothness between the replacement region 820 from the reference image and the surrounding 810 of the specular reflection region in the target image may be evaluated by a high-pass filtering of a transition region *T* 850 including a part of the replacement region from the reference image and a part of the neighborhood of the specular reflection area to be replaced in the target image. As the best candidate, the reference region *S'* may be selected, which has the smallest transition energy in the filtered transition region. This corresponds to selecting a region possibly without any artificial jumps which may be caused, for instance, by brightness changes or jagged edges 830 as shown in Figure 8.

Alternatively or in addition, the displacement vector of the specular reflection region *S* and the displacement vector of the surrounding region $D$ may be calculated and compared. The displacement vector indicates the amount of displacement of a region from one image to another image, that means, it measures the distance between a position of a region in the target image and the position of the corresponding (matching) region in the reference image. The displacement vector may be obtained, for instance by binary (in a binary image representation) displacement search of the specular reflection region. This allows for reduction of computational power needed. If the difference between the displacement of the specular reflection region and the displacement of its surrounding area is bigger than the radius of the specular reflection region, the specular region has likely been uncovered and can be advantageously used for specular reflection compensation. In case the specular reflection region is not fully uncovered in any of the plurality of available images, the image providing the highest displacement difference may be selected in order to allow at least partial specular reflection compensation. The remaining pixels may be spatially interpolated or replaced from other reference images, which means that the specular reflection region may be compensated by several reference areas each covering a different part of the specular reflection region. It may also occur that the specular reflection moves outside the search region or completely disappears in a consecutive frame, for instance, when the light source has changed. In such a case the length of the displacement vector is set to the maximal length and the specular reflection can be fully compensated by the corresponding image area.

For the evaluation of the best candidate, as a side condition it may also be penalized, if there is a large temporal distance between the surrounding of the specular reflection region $S$ in the target image and the matching surrounding $S'$ in the reference image. This allows keeping the replacement information updated and prevents from selecting as a best replacement irrelevant parts of the captured image/video sequence.

As soon as an uncovered replacement for the specular reflection region is found in the reference frame, which satisfies the matching criteria, it may be utilized to replace the specular reflection region in the current (target) frame.

In order to adapt the replacement region to its new neighborhood, a preprocessing mechanisms may be employed. In particular, it is advantageous if the transition between the replacement region cut out from the reference frame and its new surrounding in the target (current) frame is possibly smooth, while maintaining the directions and smoothness of the edges. In order to compensate for possible rotations, for instance, an affine transformation may be applied.

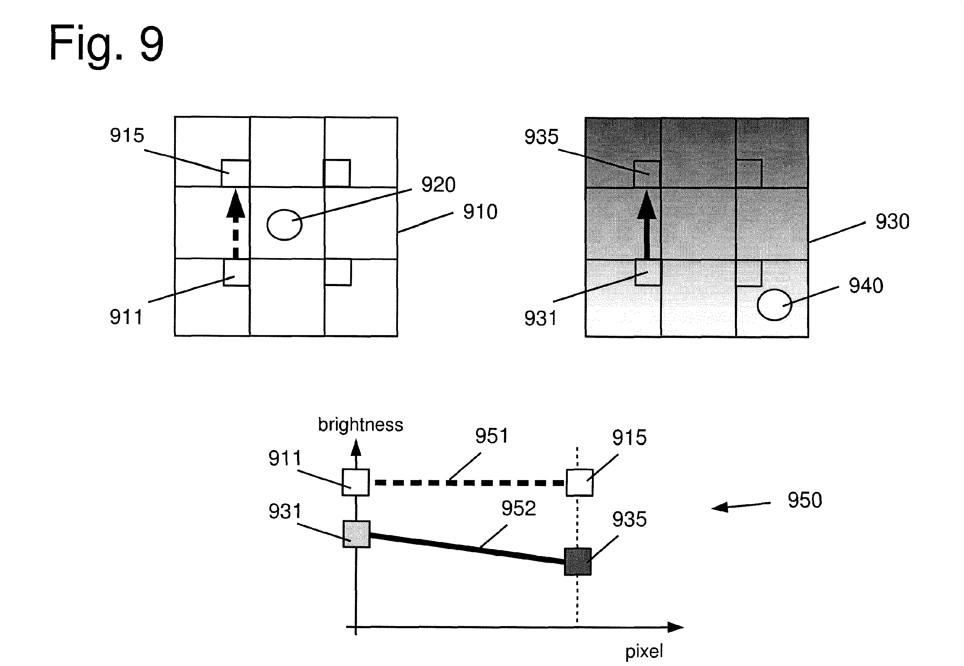

Even if the brightness difference has been considered as a criterion for selecting the best match, the brightness of the replacement may still slightly differ from the surrounding region of the specular reflection area. This problem may be overcome, for instance, by adapting the brightness of the replacement region to the surroundings by adding a constant luminance value or by adding a bilinear brightness function. An example of a compensation of brightness differences is illustrated in Figure 9. Figure 9 illustrates a target frame 910 with a specular reflection region 920 and a reference frame 930 with the corresponding displaced specular reflection region 940. Brightness compensation may be performed, for instance, by measuring the brightness of the pixels 911 and 915 in the target image and the pixels 931 and 935 in the reference image. These pixels may be on the outer (shown in the figure) or inner boundary of the specular cover region in the target image and the uncovered replacement region in the reference image. A dashed arrow in the target frame 910 illustrates a spatial change in brightness of the specular reflection cover region. A solid arrow in the reference image 930 illustrates a spatial change in brightness of the corresponding specular reflection replacement region. A graph 950 shows the measured pixels and the dashed 951 and the solid 952 connections corresponding to the dashed and solid arrows in the target image and the reference image. The lines 951 and 952 may be interpolated based on the measured pixels and based on these interpolated values, a brightness compensation for all pixels of the replacement region may be performed.

Another possibility of improving the integration of the replacement region from the reference frame into the surrounding of the specular reflection to be replaced in the target frame is filtering. For instance, optimal filtering may be employed to compensate possible sub-pixel displacement, noise, and/or motion blur. Optimal filtering may be performed, for example, by designing the filter as a Wiener filter and calculating the corresponding Wiener filter coefficients. In particular, the Wiener filter coefficient vector w is calculated as the solution of the linear equation system $C = Aw$, in which $A$ represents autocorrelation of the specular region surroundings $D$ and $C$ represents cross-correlation between the target surrounding region $D$ and the reference surrounding region $D'$.

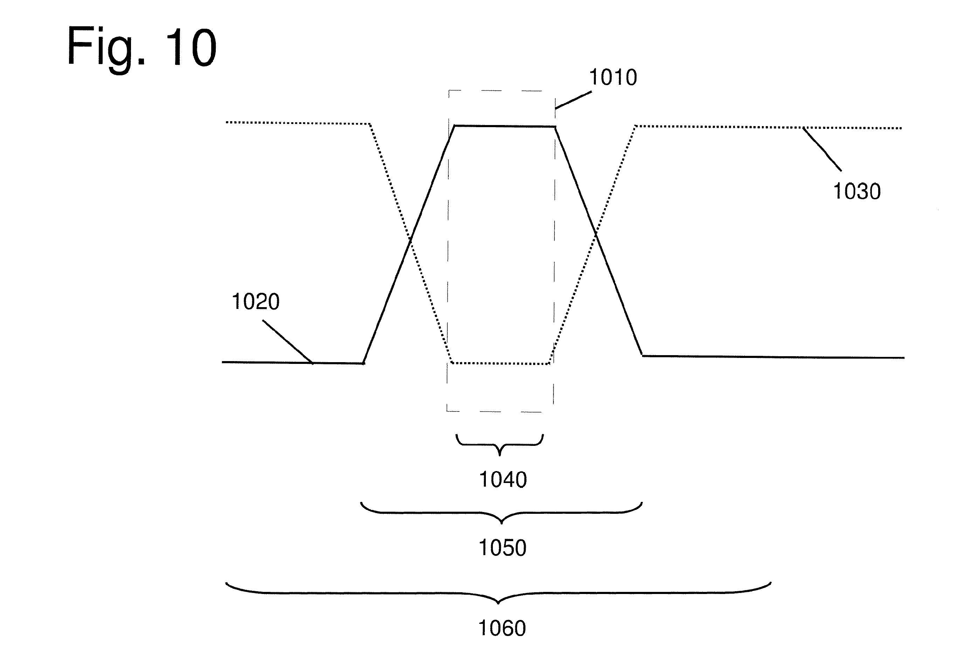

Alternatively or in addition, a weighting function may be applied to avoid abrupt transitions between the replaced region and its neighborhood. Figure 10 shows such a weighting function 1030 to be applied to the replacement region or to the replacement region cover $\tilde{S}$ from the reference image and a weighted function 1020 to be applied to the surrounding or cover in the target image $\tilde{S}'$. The framed region 1010 in the Figure represents the specular reflection area σ with a width 1040. The width 1050 represents the width of the enlarged specular reflection area $S$ and the width 1060 represents the width of the cover region $\tilde{S}$ including a portion of the specular reflection region neighborhood. In this example the weighting function is a piecewise linear function. However, smoother functions such as a raised cosine, or any other weighting functions may be used, as well.

It may occur that a specular reflection can only be compensated partly by a temporally adjacent reference frame. In such a case, image areas from other frame(s) may cover the remaining parts of the specular reflection region.

The specular reflection compensation according to the present invention is, in general, based on compensating the specular reflections in a first image with information from another single or a plurality of images. Thus, such a mechanism may be called an inter-picture specular reflection compensation. This mechanism is applicable as a temporal compensation mechanism. This means, that it is applicable for detecting and reducing the specular reflections in a sequence of images (video sequence) capturing essentially the same subject. Moreover, the present invention is also applicable for detecting and reducing the specular reflections in a plurality of images taken at the same time with different cameras. The two applications may be combined. For instance, a stereo camera may take a series of images. For reduction of specular reflections both the images taken at the same time and the images taken before or after the target image, may be used.

The stereo cameras are nowadays available not only to film producers, but also to public. Moreover, stereo cameras may also be deployed in the endoscopes. In such a case, the specular reflections can be compensated very easily, because there are always two different views of the same scene. In addition, typically, the geometry between the two views corresponding to the two captured images is known. The two views provided by the stereo camera may also be used for distinguishing between specular reflections and the other white areas in the image, based on the movement characteristic for the specular reflections. Moreover, if the relative position of the camera with respect to the light source is known, the specular reflections can be used to determine the surface orientation. On the other hand, if the position of the light source is not known, the depth and surface orientation may be estimated in order to predict the position of the light source. If the position of the predicted light source is for all specular reflections the same, it is likely that the saturated areas represent a true specular reflection.

In some applications and situations, it may be also beneficial to combine the inter-picture specular reflection compensation with an intra-picture (spatial) specular reflection compensation. The spatial specular reflection compensation is, for instance, a spatial interpolation of the specular reflection region. The interpolation may be performed as a (weighted) linear, cubic, directional (edge dependent) or any other interpolation. The interpolation type may be chosen in accordance with the characteristics of the image to be interpolated. Such a spatial specular reflection compensation replaces the specular reflection region with an image interpolated using the pixels surrounding the specular reflection region. The intra-picture and the inter-picture specular reflection compensation may also be combined. Switching between the inter-picture interpolation and the intra-picture compensation may be beneficial for applications aiming at a complete compensation of the specular reflections and that are not critical to truthfulness of the interpolated information.

In particular, switching from the inter-picture specular reflection region compensation to spatial interpolation may be beneficial if no suitable reference region (candidate for a replacement) has been found in the available plurality of reference images for replacing the specular reflection region in the target image. Switching to the spatial interpolation may also be advantageous during the time periods in which the location of the specular reflection region does not change during a large number of frames. In such a case, no suitable replacement region can possibly be found within a predefined time window. Furthermore, the switching to the spatial interpolation may be applied if the number of pixels of the specular reflection is very small, which means that the risk of missing an important detail is also low. A small spatial reflection area is, for instance an area covering several pixels. The exact classification of an area as "small" in this context depends on application and the expected size of the smallest objects of importance and on the image resolution. The above mentioned example cases, for which a switching from inter-picture to intra-picture compensation may be beneficial, may trigger an automatic switching. Other cases may be considered as well. Alternatively, or in addition to that, the spatial interpolation may be an option which may be switched on and off by a user.

The above described specular reflection compensation approach may work for a plurality of captured images, independently of the way in which they have been captured and without any information about the image capturing system. For instance, the captured images may be different images in a video sequence. Alternatively or in addition, the captured images may be images that have been captured by photographing essentially the same scene/object at the same time (such as multi-view images captured by multiple cameras). However, in case of a video sequence, when each frame is processed independently, it may occur that the temporal smoothness of the video sequence is disturbed. For instance, it may occur that in some video frames a specular reflection region is detected and compensated, while in the other frame(s) the compensation may have failed and the specular reflection region is still present. This could cause a visible flickering. In the very worst case, the picture quality after such compensation would be worse than without it. Moreover, in adjacent video frames, different reference regions may have been selected for reduction of the specular reflection region or the displacement estimation and/or replacement processing could have been performed slightly different for different video frames. This could also lead to a slight visible flickering. For instance, in the adjacent frames there may be the same specular reflection region once compensated using the displacement compensation (inter-picture) and the other time compensated with a spatial interpolation (intra-picture).

In order to improve the temporal smoothness, the knowledge of the temporal sequence of images may be used. For instance, each specular reflection may be tracked in time (from frame to frame). Then it may be ensured that a same method is applied for compensation of at least a minimal number of consecutive frames. If it is not possible to apply the same method for the minimum number of frames, the compensation may be automatically turned off in order to avoid flickering. For example, if temporal compensation cannot be applied for a certain number of frames, these frames may be spatially interpolated. If the spatial interpolation also cannot be applied for a certain number of frames, the specular reflection compensation may be turned off. The minimum number of frames, to which a method shall be applied, may be predefined. In general it may be selected with regard to a displaying frame rate so as to avoid the effect of flickering. For instance the minimum number of frames may be set such that their displaying time corresponds to a couple of seconds.

Video sequences captured by a video camera may be interlaced. For instance, also sequences taken by the endoscope are currently typically interlaced. In the case of an interlaced video sequence being an input to specular reflection reduction method or apparatus according to the present invention, it may be advantageous to handle the individual image fields separately. In general, the present invention may be applied to the fields before upsampling to the full resolution. However, in such a case, a problem with jagged edges may occur due to the vertical downsampling of the fields. Alternatively, the specular reflection reduction may be applied to the fields upsampled to the full resolution (deinterlaced). The processing in such a case is more computationally expensive.

The specular reflections often occur, for instance, as a consequence of reflection from a wet surface. The light reflected from wet surfaces and/or glass materials is typically polarized. Therefore, in order to avoid or at least reduce the specular reflections, a polarizing filter may be employed before the recording (image capturing). The polarizing filter may be, for instance, in front of the light source or in front of the camera.

Moreover, light deflection plates similar to those used in some 3D displays could also be used to avoid or reduce specular reflections. For instance, document US 7265902 B2 discloses such a 3D display. In particular, the technique described in US 7265902 B2 employs light deflection plates to separate the left and the right eye's views. The deflection plates refract the light. There is one deflection element for each pixel of the display. If the left and right eye's images are separated by even and odd pixels, the deflection elements can control the light rays in a way that only the even and odd pixels are seen by the left and right eye, respectively. Additionally to the present invention or independently therefrom, such deflection plates may be advantageously used to control the angle of the light rays of the light source in such a way that the specular reflections move slightly in order to ensure their different position in different video frames. This, on the other hand enables compensation of specular reflections by combining such frames.

Advantageously, the compensation of specular reflections according to the present inventions could be switched off/on. For instance, in case of application of the present invention to real-time video captured by an endoscope, even if the compensation works perfect, physicians may sometimes prefer to see the original image data instead of the compensated version. Therefore the original image data should be available at any time, which means that it should be possible to switch on/off the compensation at any time.

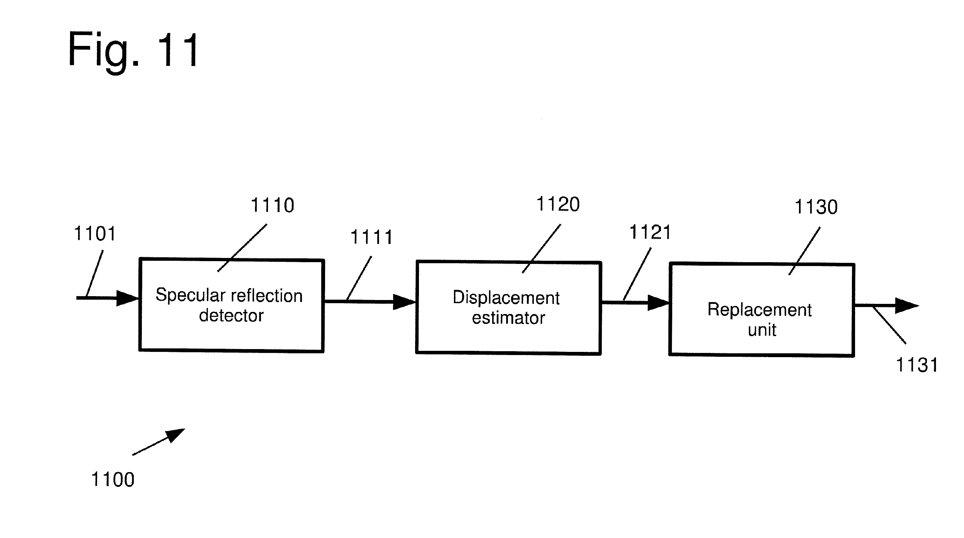

Figure 11 illustrates functional units of an apparatus 1100 for compensating specular reflections according to the present invention. The apparatus is inputted an image signal 1101. This image signal 1101 may be a video sequence or a plurality of images captured of an essentially same object, for instance, by a stereo camera or by multiple cameras (e.g. camera array), or by a single camera at different time points and with different settings (such as light conditions). The specular reflection compensator 1100 comprises a specular reflection detector 1110, a displacement estimator 1120 and a replacement unit 1130. The specular reflection detector 1110 is configured to detect specular reflections in the input image(s) 1101. This detection may be performed as described above with reference to Figure 3. The result of the detection 1111 is provided to the displacement estimator 1120. This may be, for instance a bitmap of detected specular reflection regions, or any indicator of the position, shape and size of the detected specular reflection region(s). The displacement estimator 1120 is configured to search the best match for the detected specular reflection regions in a plurality of available reference frames, for instance, as described above with reference to Figure 5. The plurality of available images here refers, for instance, to a predefined number of adjacent (previous or even following) frames of the input video sequence. The predefined number (a temporal search radius) may be pre-set with regard to the aimed application so that an appropriate candidate set may be found, and with regard to the computational complexity of the search as well as memory requirements for buffering the plurality of frames. However, the plurality of frames may also or alternatively include frames taken at the same time instant, for instance by a stereo camera or by multiple cameras, or any other images taken of the essentially the same object and scene. The output of the displacement estimator 1121 is then passed to the replacement unit 1130. This output is preferably a candidate set of replacement regions from different reference frames. The replacement unit 1130 then performs the actual replacement of the specular reflection region in the target image with the best candidate or more candidates from the set 1121 produced by the displacement estimator 1120. The image 1131 with at least partially replaced specular reflection regions is output from the apparatus.

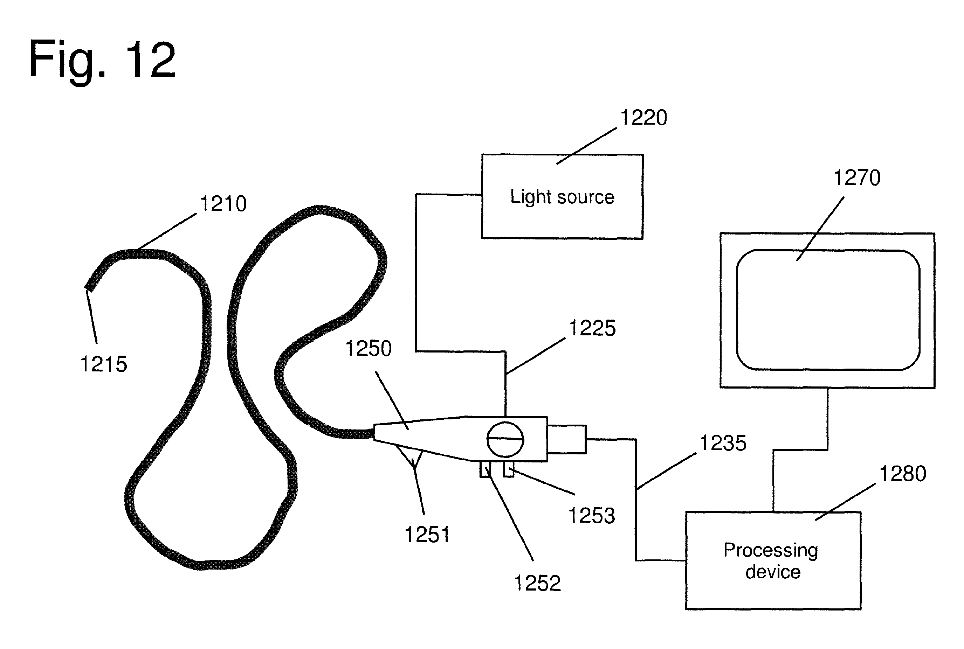

Figure 12 illustrates an example of a system which may employ an apparatus according to the present invention. It is a system for performing an endoscopy. A flexible arm 1210 is connected to a body of an endoscope 1250. A light generator 1220 may generate light which is transferred via an optic fibre 1225 to the body of the endoscope and then over an optic fibre within the flexible arm to the object of the endoscopy. The light may be emitted by an optical fibre, transmitting the light that may be generated, for instance, by a xenon lamp or by LED(s). However, the light source may also be located on the distal end 1215 of the flexible arm 1210 (for instance, the light may be emitted by one or more LEDs). Medical instruments may be introduced to the flexible arm 1210 and through it to the object of the endoscopy via an interface 1251. For water and suction, connectors 1252 and 1253 may be used. Advantageously, the camera sensor is located at the front end of the endoscope. Alternatively, the camera sensor may be located within the endoscope body 1250 or may be connected thereto externally. The particular configuration of the endoscope depends on its aimed application. The present invention is not limited by a type and construction of the endoscope and may work on captured images even without knowing their source. Moreover, the present invention is not limited to specular reflections generated by the endoscopy imaging and may be used to reduce the specular reflections in any captured images. The camera sensor in this example is connected to the specular reflection compensator, which may be a part of a multifunctional processing device 1280. The endoscopic images processed by the specular reflection compensator are finally displayed on a display device 1270 and/or stored in storage of the multifunctional processing device 1280 or in an external storage. In the endoscopy, the light source is not necessarily attached directly to the endoscope. For example in laparoscopy, there may be a light source inserted in the abdominal cavity, which is independent of the endoscope including the camera. In such a case it may occur that there is no motion in the scene, but the light source is moving. Thus, specular reflections may be compensated by an adjacent frame without motion compensation.

Another embodiment of the invention relates to the implementation of the above described various embodiments using hardware and software. It is recognized that the various embodiments of the invention may be implemented or performed using computing devices (processors). A computing device or processor may for example be general-purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

Summarizing, the present invention provides a method and an apparatus for reducing the effect of specular reflections in an image. In particular, a specular reflection region in a target image is detected and replaced, at least partially, by an image area from a reference image or a plurality of reference images. A suitable replacement region is searched within a reference image by means of displacement estimation, matching a region surrounding the detected specular reflection region with the reference image. Such specular reflection compensation mechanism has the advantage of being independent of the set-up for capturing the images.

### Claims

1. A specular reflection compensation method for reducing specular reflections in an image of a plurality of images, each image comprising a plurality of pixels, the method comprising the steps of:

   detecting (300) a specular reflection area (410) in a first image (400);
   estimating (500) a position of the detected specular reflection area (410) in a second image (600) by matching a surrounding area (440) with the second image (600), the surrounding area (440) including a plurality of pixels surrounding at least partially the detected specular reflection area (410); and
   replacing (700) at least partially the specular reflection area (410) in the first image (400) by the image area (640) at the position estimated in the second image (600).

2. The specular reflection compensation method according to claim 1 wherein the estimating step (500) further comprises the steps of:

   determining (510) in the first image (400) a reflection surrounding region (440) as an image area surrounding at least partially the detected specular reflection area (410);
   searching (530) in the second image (600), image areas matching the reflection surrounding region and suitable for replacing the specular reflection image area (410) in the first image, the suitability being measured by a predetermined criteria;
   select (540) from among the searched image areas the best candidate for replacing the specular reflection image area (410).

3. The specular reflection compensation method according to claim 2 wherein the predetermined criteria includes at least one of the amount of saturated pixels in the searched image area; mean brightness of the searched image area; amount of

spatial information, frequency information, structure, edges, or texture of the searched image area; amount of noise of the searched image area; smoothness of the transition between the searched image area and the region surrounding the detected specular reflection area; temporal distance between the first and the second frame; or spatial distance between the specular reflection area in the first frame and the corresponding region in the second frame.

4.  The specular reflection compensation method according to any of claims 1 to 3,
    wherein the estimating step (500) is repeated (520) for a plurality of images, the plurality of images including images of a video sequence or images taken by multiple cameras.

5.  The specular reflection compensation method according to any of claims 1 to 4,
    wherein the step of detecting (700) the specular reflection image area is performed by detecting saturated pixels in the first image (400).

6.  The specular reflection compensation method according to claim 5, wherein the step of detecting (700) the specular reflection image area (410) further includes:

    classifying (310) of each pixel of the first image (400) as saturated or as not saturated, wherein a pixel is classified as saturated if its value exceeds a predefined threshold and classified as not saturated otherwise; identifying (320) a specular reflection image area (410) by grouping together adjacent pixels classified (310) as saturated pixels.

7.  The specular reflection compensation method according to any of claims 1 to 6,
    wherein the step of replacing the specular reflection comprises:

    selecting (720) a replacement area (640) for replacing the specular reflection image area (410) in the first image from among a set of candidate replacement areas;
    adapting (730) the brightness of the selected (720) replacement area (640) to the brightness of the first image; and
    replacing (740) the specular reflection image area (410) with the adapted (730) replacement area (640).

8.  A computer program product comprising a computer readable medium having a computer readable program code embodied thereon, the program code being adapted to carry out the method according to any of claims 1 to 7.

9.  An apparatus for reducing specular reflections in an image of a plurality of images, each image comprising a plurality of pixels, the apparatus comprising:

    a specular reflection detector (1110) for detecting a specular reflection area (410) in a first image (400);
    a displacement estimator (1120) for estimating (500) a position of the detected specular reflection area (410) in a second image (600) by matching a surrounding area (440) with the second image (600), the surrounding area (440) including a plurality of pixels surrounding at least partially the detected specular reflection area (410); and
    a replacement unit (1130) for replacing (700) at least partially the specular reflection area (410) in the first image (400) by the image area (640) at the position estimated by the displacement estimator (1110) in the second image (600).

10. The apparatus according to claim 9 wherein the displacement estimator (1120) further comprises:

    a surrounding identification unit for determining in the first image (400) a reflection surrounding region (440) as an image area surrounding at least partially the detected specular reflection area (410);
    a matching unit for searching, in the second image (600), image areas matching the reflection surrounding region (440) and suitable for replacing the specular reflection image area (410) in the first image, the suitability being measured by a predetermined criteria;
    a candidate selection unit for selecting from among the image areas found by the matching unit the best candidate for replacing the specular reflection image area (410).

11. The apparatus according to claim 10 wherein the predetermined criteria includes at least one of the amount of saturated pixels in the searched image area; mean brightness of the searched image area; amount of spatial information, frequency information, structure, edges, or texture of the searched image area; amount of noise of the searched image area; smoothness of the transition between the searched image area and the region surrounding

**EP 2 339 534 A1**

the detected specular reflection area; temporal distance between the first and the second frame; or spatial distance between the specular reflection area in the first frame and the corresponding region in the second frame.

12. The apparatus according to any of claims 9 to 11, wherein the displacement estimator (1120) is configured to repeat the position estimation for a plurality of images, the plurality of images including images of a video sequence or images taken by multiple cameras.

13. The apparatus according to any of claims 9 to 12, wherein the specular reflection detector (1110) is configured to detect the specular reflection image area by detecting saturated pixels in the first image (400).

14. The apparatus according to claim 13, wherein the specular reflection detector (1110) further comprises:

a pixel classifier for classifying of each pixel of the first image (400) as saturated or as not saturated, wherein a pixel is classified as saturated if its value exceeds a predefined threshold and classified as not saturated otherwise;
an area forming unit for identifying a specular reflection image area (410) by grouping together adjacent pixels classified by the pixel classifier as saturated pixels.

15. The apparatus according to any of claims 9 to 14, wherein the replacement unit (1130) comprises:

a selector for selecting a replacement area (640) for replacing the specular reflection image area (410) in the first image from among a set of candidate replacement areas;
a replacement preprocessing unit for adapting the brightness of the replacement area (640) selected by the selector to the brightness of the first image (400); and
a pasting unit for replacing the specular reflection image area (410) with the replacement area (640) adapted by the replacement preprocessing unit.

Fig. 8

Fig. 1

## Fig. 3

Specular-reflection image area detection — 300

→ Detection of saturated pixels — 310

→ Identification of saturated image areas — 320

→ Dilatation — 330

→ Storing of detected regions

## Fig. 2

Specular reflection compensation

→ Specular-reflection image area detection — 300

→ Displacement estimation — 500

→ Replacement of specular-reflection image areas — 700

Fig. 4

# Fig. 5

```
        ┌─────────────────────────────┐
        │   Displacement estimation   │ ─── 500
        └─────────────────────────────┘
                      │
                      ▼
        ┌─────────────────────────────┐
        │ Determining surrounding region │ ─── 510
        │    of specular reflections   │
        └─────────────────────────────┘
                      │
                      ▼
                  ◇─────────◇
                 ◇  Next image ? ◇ ──── no ──►        ─── 520
                  ◇─────────◇
                      │
                     yes
                      │
                      ▼
        ┌─────────────────────────────┐
        │      Find best match for    │ ─── 530
        │   the surrounding region    │
        │      in the next image      │
        └─────────────────────────────┘
                      │
                      ▼
        ┌─────────────────────────────┐
        │     Store the best match    │ ─── 540
        │      in a candidate set     │
        └─────────────────────────────┘
```

# Fig. 7

```
        ┌─────────────────────────────┐
        │       Replacement of        │ ─── 700
        │  specular-reflection regions │
        └─────────────────────────────┘
                      │
                      ▼
        ┌─────────────────────────────┐
        │ Evaluate suitability of candidates │ ─── 710
        └─────────────────────────────┘
                      │
                      ▼
        ┌─────────────────────────────┐
        │    Select best candidate(s)  │ ─── 720
        └─────────────────────────────┘
                      │
                      ▼
        ┌─────────────────────────────┐
        │       Adapt transitions     │ ─── 730
        └─────────────────────────────┘
                      │
                      ▼
        ┌─────────────────────────────┐
        │ Replace specular-reflection regions │ ─── 740
        │  by the adapted best candidate(s) │
        └─────────────────────────────┘
```

EP 2 339 534 A1

# Fig. 6

(a)

600

610

(b)

630

620

(c)

640

Fig. 9

# Fig. 10

1010

1030

1020

1040

1050

1060

# Fig. 11

# Fig. 12

Light source 1220

1270

1210

1215

1250

1225

1235

1251

1253

1252

Processing device 1280

EP 2 339 534 A1

Europäisches
Patentamt

European
Patent Office

Office européen
des brevets

**EUROPEAN SEARCH REPORT**

Application Number

EP 09 17 6379

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2008/165266 A1 (JENKINS DAVID R [US]) 10 July 2008 (2008-07-10) * abstract * * paragraph [0003] * * paragraph [0019] - paragraph [0024] * ----- | 1-15 | INV. G06T5/50 |
| A | FORBIN G. ET AL: "Temporal Extension to Exemplar-based Inpainting Applied to Scratch Correction in Damaged Image Sequences" VISUALIZATION, IMAGING, AND IMAGE PROCESSING: FIFTH IASTED INTERNATIONAL CONFERENCE PROCEEDINGS., 7 September 2005 (2005-09-07), - 9 September 2005 (2005-09-09) pages 1-5, XP002579645 ISBN: 0-88986-528-0 * the whole document * ----- | 1-15 | |

TECHNICAL FIELDS
SEARCHED (IPC)

G06T

The present search report has been drawn up for all claims

| Place of search | Date of completion of the search | Examiner |
|---|---|---|
| Munich | 26 April 2010 | Millet, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 09 17 6379

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2010

| Patent document cited in search report | Publication date | Patent family member(s) | Publication date |
|---|---|---|---|
| US 2008165266 A1 | 10-07-2008 | CA 2674324 A1<br>CN 101573988 A<br>EP 2103149 A1<br>KR 20090094833 A<br>WO 2008085724 A1 | 17-07-2008<br>04-11-2009<br>23-09-2009<br>08-09-2009<br>17-07-2008 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6088612 A
- US 20080165266 A1
- US 7265902 B2

**Non-patent literature cited in the description**

- Optical Flow Estimation. **D.J. Fleet ; Y. Weiss et al.** s et al. (ed.) ''Mathematical Models in Computer Vision: The Handbook. Springer, 2005, 239-258